Europäisches Patentamt

European Patent Office

Office européen des brevets

(19)

(11) **EP 1 313 280 A1**

(12) **EUROPEAN PATENT APPLICATION**

(43) Date of publication:
21.05.2003 Bulletin 2003/21

(51) Int Cl.[7]: **H04L 27/227**

(21) Application number: 01440384.4

(22) Date of filing: 14.11.2001

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **ALCATEL**
**75008 Paris (FR)**

(72) Inventors:
• **Robin, Laurent**
**75015 Paris (FR)**
• **Lahrech, Ahmed**
**91230 Montgeron (FR)**

(74) Representative: **Urlichs, Stefan, Dipl.-Phys. et al**
**Alcatel**
**Intellectual Property Department**
**70430 Stuttgart (DE)**

(54) **Method for correcting phase errors in a received signal and corresponding receiver**

(57) The present invention relates to a method for correcting phase errors in a digital signal comprising symbols (r(k)) received at a receiver, the signal being modulated with a modulation having at least a phase modulation component.

According to the present invention, the method comprises the steps of

i. evaluating a phase correction term for a current received symbol;

ii. Storing a copy of the current received symbol and delaying the copy of current received symbol by a predefined time delay substancially equal to a time delay necessary for the evaluation at step i.;

iii. applying to the delayed copy of the current received symbol a phase shift equal to the error correction term.

**Fig 2**

EP 1 313 280 A1

**Description**

**Background of the Invention**

The present invention relates to a method for correcting phase errors in a signal received at a receiver of a communication network, more particularly when the signal is modulated with a modulation comprising at least a phase modulation component.

A signal modulated with a modulation comprising a phase modulation component, can be represented by following formula:

$$s(t) = a(t) \cos(\bar{\omega} \cdot t + \varphi(t))$$

The demodulation of such a signal is performed by multiplying the received signal at the receiver with a cosine signal generated at a local oscillator having the same period $\bar{\omega}$. This operation enables to recover the phase $\varphi(t)$ of the received signal. Having knowledge of the signal phase and of the used modulation, the receiver is able to demodulate the signal. A simple hard decision module can be used to associate a modulation symbol part of the used modulation constellation to a current received symbol.

However, due to slight frequency difference between local oscillators in the transmitter and in the receiver and due to the presence of additive gaussian noise, a residual phase error in the received signal generates errors at the demodulator. The demodulator is then susceptible to associate a wrong modulation symbol to the current received symbol.

In prior art, some methods where proposed to cope with this problem and minimise the demodulation errors due to frequency difference and additive gaussian noise. Usually, they consist in compensating a phase error by applying a phase shift to the signal before demodulation.

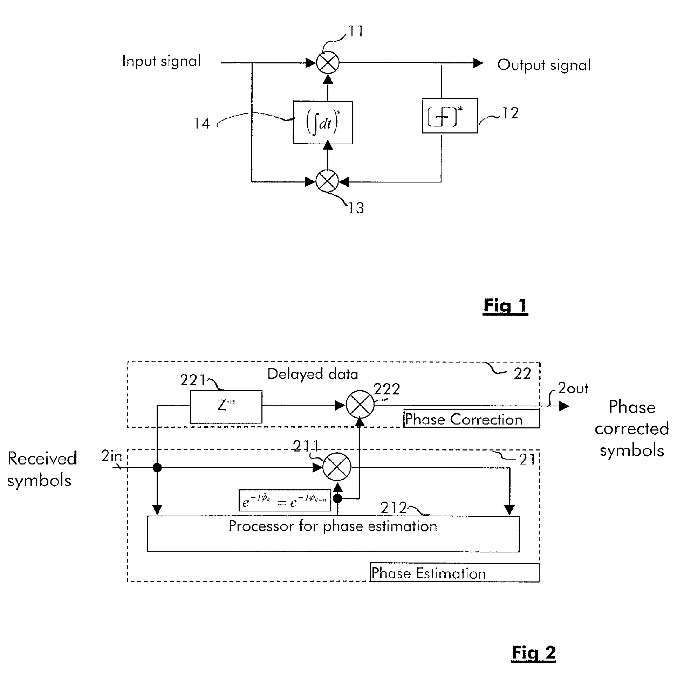

A prior art method consists in evaluating the phase error in a loop with feedback decision as described in figure 1. An input signal is multiplied with a phase error estimation at a multiplier 11. This signal is connected to a signal output and simultaneously submitted to a hard decision module 12. Hard decision module 12 determines, according to a well-known method, the modulation symbol belonging to the used modulation constellation which corresponds the best to the current symbol after phase correction. Preferably, the complex conjugate number of the selected modulation symbol is calculated at hard decision module 12. The loop for determining the phase error estimation consists in multiplying at a multiplier 13 the signal at the output of hard decision module 12 with the input signal.

In a simple embodiment, the result of this multiplication represents the phase error and the corresponding phase shift is used for correcting the next received symbol at multiplier 11.

In a preferred mode, phase errors computed on several previously received symbols are averaged at integrator 14 for obtaining a phase correction term less subject to sudden error peaks.

This solution presents, nevertheless, the disadvantage not to be optimized for coping with very noisy consecutive symbols and to generate in such a situation lots of consecutive wrong decisions at the hard decision module. Moreover, the stronger the frequency difference between local oscillators, the more the estimated phase error suffers from a bias due to phase drift between the current received symbol and the estimated phase error.

A particular object of the present invention is to provide a method for evaluating a phase error in a signal modulated with a modulation comprising at least a phase modulation component minimizing the bias in the phase error estimation due to a strong frequency difference between local oscillators.

Another object of the invention is to provide a receiver for performing this method.

**Summary of the Invention**

These objects, and others that appear below, are achieved by a method for correcting phase errors in a signal according to claim 1 and a corresponding receiver according to claim 6.

According to the present invention, the phase correction term evaluated for a given received symbol in a module for phase error estimation is applied to correct this given symbol in that the given symbol is delayed by the time necessary for processing the phase correction term. In prior art on the contrary, the phase correction term evaluated for a given symbol were applied to correct a following symbol since the processing time for processing the phase correction term was not taken into account.

The method according to the present invention presents the advantage to apply error correction terms to a given symbol, which error correction term was calculated on the basis of this given symbol. This presents the advantage not to propagate bias from one symbol to the subsequent symbols. This method gives also a higher resistance to disconnecting in a circuit-oriented transmission mode or lower cell loss rate in a packet-oriented transmission mode.

The method according to the present invention further presents the advantage not to require a high processing power.

Further advantageous features of the invention are defined in the other dependent claims.

**Brief Description of the Drawings**

Other characteristics and advantages of the invention will appear on reading the following description of a preferred embodiment given by way of non-limiting illustrations, and from the accompanying drawings, in which:

- Figure 1 shows a prior art demodulator using a loop with decision feedback for compensating phase impairments;
- Figure 2 represents a receiver for correcting phase errors according to the present invention;
- Figure 3 shows an implementation of the method according to the present invention;
- Figure 4 is a diagram showing the performance of the method according to the present invention compared to prior art methods.

**Detailed Description of the Invention**

Figure 1 has already been described in connection with prior art.

The present invention will be described in the framework of a radio communication network. However, the present invention can be used in any other type of communication networks transporting modulated voice or data as a cable network or an optical fiber network. The application of the present invention to a radio communication network as described below should be viewed as not restrictive.

Figure 2 represents a receiver according to the present invention. The receiver comprises a signal input 2in, a signal output 2out, a module 21 for phase error estimation, a module 22 for phase correction. The signal output 2out is preferably connected to further not represented receiver modules as an equalizer and / or a decoder. The present invention does not depend on these further modules present at the receiver.

Module 21 for phase error estimation comprises a multiplier 211, an a processor 212.

Module 22 for phase correction comprises a time delay module 221 and a multiplier 222.

On the one hand signal input 2in is connected to time delay module 221 of module 22 for phase correction which is connected to multiplier 222 eventually connected to signal output 2out.

On the other hand, signal input 2in is connected directly to a first input of processor 212 and also connected to a second input of processor 212 over multiplier 211. The output of processor 212 is looped back to multiplier 211 on the one hand and connected to multiplier 222 of module 22 for phase correction on the other hand.

Module 21 for phase error estimation may correspond to the module for compensating phase impairments as described in relation with prior art on figure 1 except that no output signal leaves module 21. Indeed multiplier 11 corresponds to multiplier 211 and module for hard decision multiplier 13 as well as integrator 14 correspond to parts of functionality of processor 212.

Additionally to the module for compensating phase impairments as described in prior art, the output of processor 212 which consists in a phase shift $e^{-j\hat{\varphi}_{error}(k)}$ is also connected to the input of multiplier 222 in phase correction module 22.

Time delay module 221 delays the symbols of the received digital signal r(k) which enters receiver over signal input 2in. The chosen time delay is preferably equal to the processing time necessary for evaluating the phase error at output of processor 212 for a symbol received at input 2in. This time delay comprises the time necessary for performing following operations: hard decision, calculation of the complex conjugate number, multiplication, integration and every operation that can additionally delay the computation of the phase correction term. This time delay is preferably a system parameter which is hard coded in time delay module 221.

In a preferred embodiment of the present invention, the time delay is chosen equal to a multiple n of the symbol duration Ts. The duration n·Ts being substantially equal to the processing time necessary for evaluating the phase error at output of processor 212. For this purpose, n is chosen so that:

$$|n \cdot Ts - Proceesing\ Time| \leq |(n+1) \cdot Ts - Proceesing\ Time|\ and$$

$$|n \cdot Ts - Proceesing\ Time| \leq |(n-1) \cdot Ts - Proceesing\ Time|$$

If n·Ts is not exactly equal to the processing time necessary for evaluating the phase error at the output of processor 212, the output of processor 212 should also be delayed to be exactly synchronized with the output of time delay module 211 at the input of multiplier 222. This delay is smaller than half of a symbol duration.

To summarize a received current symbol r(k) is delayed at time delay module 221 by a predefined time delay, applied phase shift $e^{-j\hat{\varphi}_{error}(k)}$ at multiplier 222 and forwarded to the output 2out of the module for phase correction 22.

As a consequence, the phase shift $e^{-j\hat{\varphi}_{error}(k)}$ obtained by processing the received symbol r(k) and specially adapted to this symbol can be applied to this symbol r(k) and not to a subsequent symbol r(k+i) as in prior art.

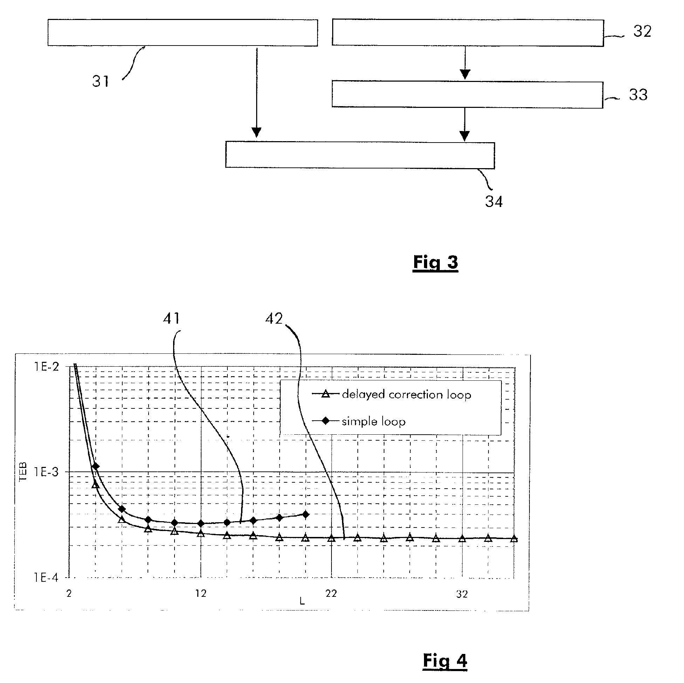

Figure 3 shows a possible implementation of the method according to the present invention.

Step 31 consists in delaying a currently received symbol r(k) by a predefined time delay.

During this time delay and in parallel, step 32 consists in evaluating a phase correction term for the current received symbol by processing the current received symbol by preferably performing a hard detection and a comparison between the phase of the current symbol after phase correction at multiplier 211 and hard detection and the phase of the received symbol at the input of module 21 for phase error estimation. The result of this step consist in a phase shift $e^{-j\hat{\varphi}_{error}(k)}$.

Step 33 consists in computing one or several accumulated phase difference $e^{-j\hat{\varphi}_{error}(k)}$ to deliver a phase correcting term to module 22 for phase correction.

Step 34 consists in correcting the delayed received symbol by multiplying it with the phase shift $e^{-j\hat{\varphi}_{error}(k)}$.

Figure 4 is a diagram showing performances of the method according to the present invention compared to a prior art method. For this purpose, the present invention has been tested in a bursted mode context of a LMDS system. The diagram represents the number of symbols used to integrate the phase error on the x-axis and the bit error rate on the y-axis.

A first curve 41 represents performances of a phase error correction system with a conventional feedback loop as described in figure 1 in presence of frequency drift.

A second curve 42 represents performances of a phase error correction system with delayed data according to the present invention in presence of frequency drift.

For this purpose, packets having randomly distributed frequency and phase offsets, df, have been submitted to the two different phase error correction systems. The number of wrong bytes per packet has been determined after phase error correction. This number of wrong bytes does not take into account any error correction made thanks to an error correcting code but only the wrong bytes due to a bad hard decision.

For curves 41 and 42, the randomly distributed frequency offsets have been chosen in an interval so that $|df \cdot Ts| \leq 5e^{-4}$. Ts being the symbol duration.

This diagram shows an improvement of the system performance when using the method according to the present invention since curve 42 shows a lower number of wrong bytes than curves 41.

The invention can be used in bursted mode especially in the uplink transmission direction of a transmission network. In this case, the successive packets received at a base station are transmitted by different terminals and then submitted to different phase errors due for example to different oscillator drifts at the different terminals. It is necessary, in this case, that the base station performs a new initialization of the module 21 for phase error estimation after each received packets. The initialization is preferably realized during the reception of the packet preamble.

The invention may also be used with the same advantage in a continue (non-bursted) mode where successive packets are issued by the same transmitter. This would be the case in the downlink transmission direction where a base station broadcast a data or transmit a Time division Multiplex to different terminals. In this case, no re-initialization between packets is necessary.

**Claims**

1. Method for correcting phase errors in a digital signal comprising symbols (r(k)) received at a receiver, said signal being modulated with a modulation having at least a phase modulation component, said method comprising the steps of :

    i. evaluating a phase correction term for a current received symbol;
    ii. Storing a copy of said current received symbol and delaying said copy of current received symbol by a predefined time delay substantially equal to a time delay necessary for said evaluation at step i.;
    iii. applying to said delayed copy of said current received symbol a phase shift equal to said error correction term.

2. Method according to claim 1, comprising the step of applying to said delayed copy of said current received symbol a phase shift obtained as a predefined function of phase correction terms obtained for said current received symbol and at least one additionally previously received symbol.

3. Method according to claim 1, wherein the evaluation of said error correction term comprises the steps of:

- performing a hard decision (31) on a current received symbol after a first phase correction;
- evaluating a phase correction term (33) as a predefined function of a phase difference between said current symbol after hard decision (dk) and said current symbol as received at said receiver (r(k));

4. Method according to claim 3, wherein said phase difference is obtained by multiplying the complex conjugate number of said current symbol after hard decision (dk) and with said current symbol as received at said receiver (r(k)).

5. Method according to claim 1, wherein said time delay is a multiple of the symbol duration (Ts).

6. Receiver dedicated to receive a digital signal comprising symbols (r(k)), said signal being modulated with a modulation having at least a phase modulation component, said receiver comprising :

- a phase error estimation module (21) for evaluating a phase correction term upon reception of a current symbol;
- a phase correction module (22) comprising a time delay module (221) followed by a multiplier (222) for applying to current received symbol a phase shift equal to said phase correcting term, said time delay module (221) delaying a copy of said current received symbol by a predefined time delay substantially equal to the time necessary for phase correction term estimation for said current received symbol.

7. Receiver according to claim 6, wherein said phase error estimation module (21) comprises:

- a hard decision module (12) for selecting a modulation symbol out of a set of predefined modulation symbols for a current received symbol after a first phase correction;
- a first multiplier (13) for calculating a phase correcting term as a function of a phase difference between a symbol after hard decision and said symbol as received at said receiver.

8. Receiver according to claim 7, wherein said phase error estimation module (21) further comprises an integration module (14) for averaging said phase correcting term with at least one phase correcting term obtained for a previously received symbol;

9. Receiver according to claim 6 adapted to be used in a radio communication network.

Input signal $\longrightarrow$ $\otimes$ 11 $\longrightarrow$ Output signal

14 $\left(\int dt\right)^{*}$ $\left[\underset{}{\text{}}\right]^{*}$ 12

$\otimes$ 13

**Fig 1**

22 Delayed data

221 $Z^{-n}$ 222 $\otimes$ 2out

Phase Correction

Phase corrected symbols

Received symbols 2in

211 $\otimes$

21

$e^{-J\hat{\varphi}_k} = e^{-J\varphi_{k-n}}$

212

Processor for phase estimation

Phase Estimation

**Fig 2**

**Fig 3**

**Fig 4**

European Patent
Office

**EUROPEAN SEARCH REPORT**

Application Number

EP 01 44 0384

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| X | FR 2 721 778 A (FRANCE TELECOM) 29 December 1995 (1995-12-29) * page 9, line 3 - line 6 * * page 9, line 25 - line 27 * ----- | 1-9 | H04L27/227 |

TECHNICAL FIELDS
SEARCHED        (Int.Cl.7)

H04L

The present search report has been drawn up for all claims

| Place of search | Date of completion of the search | Examiner |
|---|---|---|
| THE HAGUE | 10 May 2002 | Orozco Roura, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

**EP 1 313 280 A1**

## ANNEX TO THE EUROPEAN SEARCH REPORT
## ON EUROPEAN PATENT APPLICATION NO.

EP 01 44 0384

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2002

| Patent document cited in search report | Publication date | Patent family member(s) | Publication date |
|---|---|---|---|
| FR 2721778 A | 29-12-1995 | FR 2721778 A1 | 29-12-1995 |
| | | EP 0767996 A1 | 16-04-1997 |
| | | WO 9600472 A1 | 04-01-1996 |

EPO FORM P0459

For more details about this annex : see Official Journal of the European Patent Office, No. 12/82

9